# EUROPÄISCHE PATENTSCHRIFT

(11) **EP 0 788 823 B1**
(45) Veröffentlichungstag und Bekanntmachung des Hinweises auf die Patenterteilung: **04.06.2003**
(21) Anmeldenummer: 97101304.0
(22) Anmeldetag: 29.01.1997
(51) Int. Cl.: B01D 29/11

(54) **Filtereinsatz für ein Flüssigkeitsfilter**
Filtering insert for a liquid filter
Elément filtrant pour un filtre de liquide

(30) Priorität: 07.02.1996 DE 19604371
(43) Veröffentlichungstag der Anmeldung: 13.08.1997
(73) Patentinhaber: ROBERT BOSCH GMBH, 70442 Stuttgart (DE)
(72) Erfinder: Lucas, Bernhard, 74395 Mundelsheim (DE); Kesel, Ingo, 71696 Moeglingen (DE); Projahn, Ulrich, Dr., 71229 Leonberg (DE); Altpeter, Arno, 71067 Sindelfingen (DE); Zorzin, Luciano, 28042 Madrid (ES); Torremocha, Eugenio Fernandez, Madrid (ES)

(56) Entgegenhaltungen:
- DE-A- 1 461 451
- US-A- 4 295 525
- US-A- 5 342 519

## Beschreibung

### Stand der Technik

Die Erfindung geht aus von einem Filtereinsatz für ein Flüssigkeitsfilter nach der im Oberbegriff des Anspruchs 1 näher angegebenen Gattung.

Es ist schon ein solcher Filtereinsatz für Kraftstoff-Filter aus der DE 35 14 778 C1 bekannt, bei dem das sternförmig ausgeführte Filterelement zwischen zwei stirnseitig angeordneten Endscheiben aus Kunststoff dicht und fest angeordnet ist. Während die eine Endscheibe geschlossen ausgeführt ist, baut die andere Endscheibe offen und weist dazu in einem mittigen Anschlußstutzen einen zentralen Durchgang auf, in dem zugleich zur Befestigung einer Kraftstoffleitung eine Gewindemutter aus Metall eingesetzt ist. Die offene Endscheibe hat auf diese Weise Anschlußmittel, die hier als Gewindestutzen ausgeführt sind. Ferner ragen in das Innere des Filtereinsatzes Stützrohre, welche aus Kunststoff bestehen und einstückig mit den Endscheiben ausgeführt sind. Die Endscheiben werden hier im Kunststoff-Spritzgießverfahren hergestellt, so daß bei unterschiedlichen Anschlußarten jeweils gesonderte Spritzwerkzeuge notwendig sind, was erheblichen Kosten- und Fertigungsaufwand erfordert. Zur Befestigung des Filtereinsatzes im eigentlichen Filtergehäuse sind je nach Ausführung des Filters verschiedenartige Anschlüsse notwendig. Ferner hat der vorbekannte Filtereinsatz den Nachteil, daß bei dessen Herstellung die aus Kunststoff bestehenden Endscheiben zum Einsumpfen des aus Filterpapier bestehenden Sternelements mittels einer Heizeinrichtung aufgeschmolzen werden müssen. Beim Aufschmelzen solcher Kunststoffe, die gegen Kraftstoff widerstandsfähig sein müssen, wird bedingt durch deren hohen Schmelzpunkt ein entsprechend hoher Energieaufwand notwendig, was einer kostengünstigen Herstellung entgegensteht.

Ferner ist aus der DE 44 16 577 A1 ein ähnlicher Filtereinsatz bekannt, bei dem ein Sternfilterelement zwischen zwei Endscheiben aus Kunststoff angeordnet ist, wobei die offene Endscheibe für eine andere Anschlußart ausgeführt ist. Die offene Endscheibe weist hier als Anschlußmittel einen im zentralen Durchgang liegenden Dichtring auf, so daß für diese Bauart eine gesonderte Spritzgießform erforderlich ist.

Ferner ist es aus der DE-AS 1 461 451 bekannt, bei einem Filtereinsatz mit hohlzylindrisch ausgebildetem Filterelement die abdichtenden Endscheiben durch Vergießen von Kunststoff in einer Form herzustellen, so daß ein zusätzliches Aufschmelzen zum Einsumpfen des Papierelements entfällt. Hier ist die offene Endscheibe in eine Grundplatte aus Kunststoff eingegossen, die neben ihrem zentralen Gewindestutzen außenliegende Einlaßöffnungen aufweist und selbst ein Teil eines Filtergehäuses darstellt. Diese Grundplatte baut sehr aufwendig und eignet sich nicht für verschiedene Anschlußvariationen bei kostengünstiger Bauweise.

DE 4222136 A1 zeigt einen Flüssigkeitsfilter mit einem Filterelement mit einem doppelkonischen Stopfen 26. Der doppelkonische Stopfen 26 wird von einem Federelement 24 in einen im Deckel 13 des Gehäuses 11 vorgesehenen konischen Übergangsbereich 17 hineingedrückt.

EP 0773052 A1 offenbart ein Ringfilterelement, in dem das Filterelement 11 dichtend zwischen stirnseitigen Endscheiben 12, 13 aus Kunststoff angeordnet ist, wobei die eine Endscheibe 12 geschlossen ausgebildet ist.

### Vorteile der Erfindung

Der erfindungsgemäße Filtereinsatz mit den kennzeichnenden Merkmalen des Anspruchs 1 hat demgegenüber den Vorteil, daß er bei gleicher Grundbauform eine größtmögliche Variantenvielfalt ermöglicht, wobei er zudem einfach und kostengünstig herstellbar ist. Die zusätzlichen Innenteile sind universell verwendbar, leicht herstellbar und günstig zu befestigen. Der Filtereinsatz läßt sich in energiesparender Weise herstellen, indem das Einsumpfen des Filterelements beim Gießen der Endscheiben aus Kunststoff vorgenommen wird, bevor der Kunststoff erstarrt und eine dichte und feste Verbindung herstellt. Der hohe Energieaufwand zum erneuten Aufschmelzen eines kraftstoffresistenten Kunststoffes kann damit entfallen.

Durch die in den Unteransprüchen aufgeführten Maßnahmen sind vorteilhafte Weiterbildungen und Verbesserungen des im Anspruch 1 angegebenen Filtereinsatzes möglich. Eine besonders kostengünstige und widerstandsfähige Bauart des Filtereinsatzes läßt sich erreichen, wenn er gemäß den Ansprüchen 2 bis 8 ausgeführt wird. Vor allem läßt sich dadurch eine leicht herstellbare, stabile und sichere Verbindung zwischen dem Außenring und dem Innenteil erreichen, die auch einem lang andauernden Betrieb bei aggressiven Kraftstoffen standhält. Gemäß den Ansprüchen 9 und 10 lassen sich für verschiedene Anschlußarten mit möglichst geringem Aufwand unterschiedliche Bauartvarianten erreichen. Besonders günstig für eine einfache, kostengünstige und stabile Verbindung ist es, wenn die offene Endscheibe gemäß dem Anspruch 12 als Schweißverbindung ausgeführt wird. Vorteilhaft ist ferner eine Ausführung nach Anspruch 13, wobei an das in eine Spritzform eingelegte Innenteil der Außenring angegossen wird, so daß eine feste und dichte Verbindung entsteht.

### Zeichnung

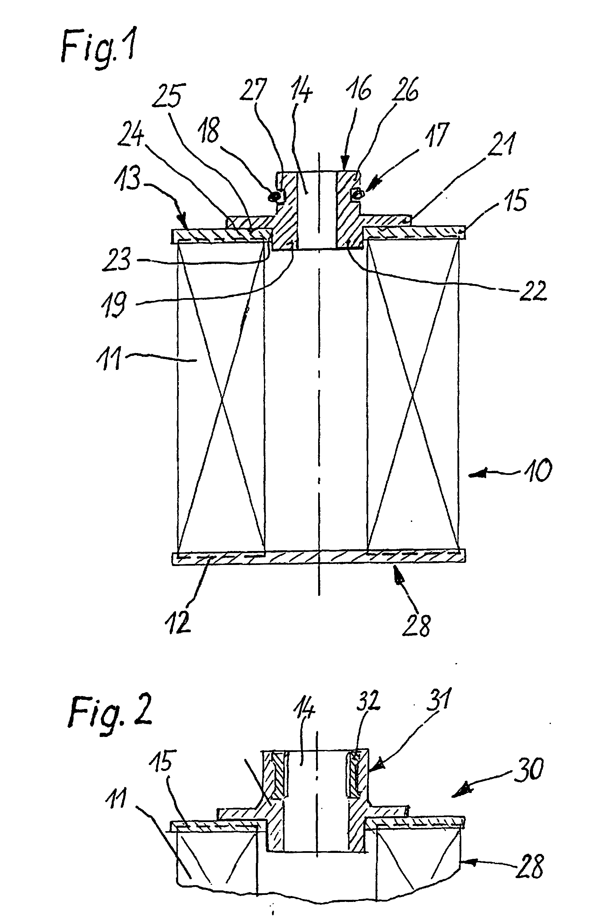

Zwei Ausführungsbeispiele der Erfindung sind in der Zeichnung dargestellt und in der nachfolgenden Beschreibung näher erläutert. Es zeigen Figur 1 einen Längsschnitt durch ein erstes Ausführungsbeispiel eines Filtereinsatzes für ein Kraftstoff-Filter und Figur 2 einen Längsschnitt durch einen Teil eines zweiten Ausführungsbeispiels.

### Beschreibung der Ausführungsbeispiele

Die Figur 1 zeigt einen Längsschnitt durch einen Filtereinsatz 10 für ein Flüssigkeitsfilter in vereinfachter Darstellung, wie es bei Kraftstoff-Filtern verwendet wird. Der Filtereinsatz 10 hat ein hohlzylindrisch ausgebildetes Filterelement 11, das aus einem sternförmig gefalteten Filterpapier besteht und dessen zickzackförmig verlaufende Ränder in stirnseitigen Endscheiben 12, 13 aus Kunststoff dicht befestigt sind. Die untere Endscheibe 12 ist geschlossen und als ebene, kreisrunde Platte ausgebildet, während die obere Endscheibe 13 durch einen zentralen Durchgang 14 offen ausgebildet ist. Das sternförmige Filterelement 11 ist somit für eine radiale Durchströmung vorgesehen, wobei dies in der Regel von innen nach außen geschieht. Die sternförmig verlaufenden Ränder an den Stirnseiten des Filterelements 11 sind in die aus Kunststoff bestehenden Endscheiben 12, 13 eingegossen. Dies wird dadurch realisiert, daß das flüssige Kunststoffmaterial in eine Form eindosiert wird und in der Regel daran anschließend das papierne Filterelement 11 in das noch nicht erstarrte Material gedrückt wird. Nach dem Aushärten des Kunststoffs wird eine dichte und feste Verbindung zwischen Endscheiben 12, 13 und Filterelement 11 erreicht.

Wie die Figur 1 näher zeigt, ist die offene Endscheibe 13 zweiteilig aufgebaut und besteht aus einem mit dem Filterelement 11 verbundenen Außenring 15 und einem Innenteil 16, in dem neben dem zentralen Durchgang 14 die Anschlußmittel 17 angeordnet sind, die hier als O-Ring 18 ausgebildet sind. Das Innenteil 16 ist im wesentlichen rotationssymmetrisch ausgebildet und hat eine den Durchgang 14 aufnehmende Nabe 19, an deren Außenumfang ein sich radial erstreckender Ringflansch 21 einstückig angeformt ist. Das Innenteil 16 ist mit einem in das Innere des Filtereinsatzes 10 ragenden Nabenteil 22 in einer Führungsbohrung 23 des Außenrings 15 zentriert. Der Außendurchmesser des Ringflansches 21 ist wesentlich größer als der Innendurchmesser der Führungsbohrung 23; ferner weisen der Ringflansch 21 und der Außenring 15 jeweils einen rechteckigen Querschnitt auf, deren lange Seiten aneinanderliegen, so daß zwischen beiden eine relativ große, überlappende Berührungsfläche 24 liegt. Diese Berührungsfläche 24 ist nun als Schweißverbindung 25 ausgeführt, so daß der Außenring 15 mit dem Innenteil 16 dicht und fest verbunden ist. Die Schweißverbindung 25 ist dabei vorteilhaft durch Ultraschallschweißen oder durch Reibschweißen herstellbar. Das Innenteil 16 hat ferner ein nach außen ragendes Nabenteil 26, an dessen Außenumfang in einer Ringnut 27 der Dichtring 18 angeordnet ist.

Das Innenteil 16 ist einfach, stabil und kostengünstig aufgebaut und kann aus dem gleichen Kunststoff hergestellt werden wie der Außenring 15. Vorteilhaft läßt sich dafür ein gegen Kraftstoff widerstandsfähiger Kunststoff, wie zum Beispiel Polyamid, verwenden. Der Außenring 15 mit dem Filterelement 11 und der geschlossenen Endscheibe 12, also ohne das Innenteil 16, bilden zusammen ein Grundelement 28, das als Ausgangsbasis für verschiedene Filtereinsätze verwendbar ist. Bei der Herstellung des Filtereinsatzes 10 kann dabei so vorgegangen werden, daß zuerst das Grundelement 28 aufgebaut wird und anschließend das Innenteil 16 an den Außenring 15 angeschweißt wird. Der so hergestellte Filtereinsatz 10 wird in ein nicht näher gezeichnetes Filtergehäuse eingebaut, wobei der O-Ring 18 in an sich bekannter Weise die Abdichtung zwischen der Schmutzund der Reinseite im Inneren des Filtergehäuses übernimmt.

Die Figur 2 zeigt einen Längsschnitt durch einen Teil eines zweiten Filtereinsatzes 30, der sich vom ersten Filtereinsatz 10 nach Figur 1 wie folgt unterscheidet, wobei gleiche Bauelemente mit gleichen Bezugszeichen versehen sind. Der zweite Filtereinsatz 30 weist ein gleiches Grundelement 28 auf, an dessen offener Endscheibe 13 ein anderes Innenteil 31 festgeschweißt ist. Beim Innenteil 31 ist in den zentralen Durchgang 14 eine Gewindemutter 32 aus Metall eingesetzt, die hier als Anschlußmittel 17 dient. Das Innenteil 31 läßt sich in gleicher Weise wie beim ersten Filtereinsatz 10 durch Schweißen am Außenring 15 befestigen. Der zweite Filtereinsatz 30 wird in an sich bekannter Weise in ein nicht näher gezeichnetes Filtergehäuse eingebaut, wobei in die Gewindemutter 32 eine Kraftstoffleitung eingeschraubt werden kann. Auf diese Weise läßt sich ohne Änderung des Grundelements 28 eine andere Anschlußbauart verwirklichen, so daß mit geringstmöglichem Aufwand eine größtmögliche Variationsvielfalt realisierbar ist.

Selbstverständlich sind an den gezeigten Ausführungsbeispielen Änderungen möglich, ohne vom Gedanken der Erfindung abzuweichen. Anstelle der gezeigten Innenteile mit den Anschlußmitteln in Form von Dichtring-Ringnut beziehungsweise Gewindemutter für Schraubanschluß, lassen sich auch anders aufgebaute Innenteile verwenden. Obwohl es zweckmäßig ist, die beiden Teile der offenen Endscheibe aus dem gleichen Kunststoff herzustellen und sie durch eine Schweißverbindung fest und dicht miteinander zu befestigen, kann es auch zweckmäßig sein, diese beiden Teile in der Berührungsfläche 24 miteinander zu verkleben.

Bei der Herstellung des Filtereinsatzes 10, 30 kann es auch zweckmäßig sein, die Innenteile aus thermoplastischem Kunststoff herzustellen und in eine Spritzform einzulegen, in die anschließend eine thermoplastische Schmelze für den Außenring 15 frei extrudiert wird. Dabei wird das Innenteil im Bereich der Berührungsfläche 24 von der extrudierten Schmelze angeschmolzen. Ferner wird in diese Schmelze das papierne Filterelement stirnseitig eingetaucht. Nach dem Erstarren der Schmelze kann die offene Endscheibe 13 aus der Spritzform ausgehoben werden, wobei das Filterelement stirnseitig dicht verschlossen ist und die beiden Teile der Endscheibe dicht und fest miteinander verbunden sind.

## Patentansprüche

1. Filtereinsatz für ein Flüssigkeitsfilter, insbesondere für Kraftstoff-Filter, mit einem im wesentlichen hohlzylindrisch ausgebildeten Filterelement, insbesondere aus sternförmig gefaltetem Filtermaterial, welches Filterelement dichtend zwischen stirnseitigen Endscheiben aus Kunststoff angeordnet ist und von der zu filternden Flüssigkeit radial zur Längsachse des Filtereinsatzes durchströmbar ist, wozu die eine Endscheibe geschlossen ausgebildet ist, während die andere Endscheibe einen zentralen Durchgang und Anschlußmittel zum Verbinden mit einem Druckmittelanschluß aufweist, wobei die andere Endscheibe (13) zweiteilig aufgebaut ist und einen mit dem Filterelement (11) verbundenen Außenring (15) und ein die Anschlußmittel (17, 18, 27, 32) und den Durchgang (14) beinhaltendes Innenteil (16, 31) aufweist, das Innenteil (16, 31) eine den Durchgang (14)beinhaltende Nabe (19) und einen Ringflansch (21, 24) hat, wobei die Anschlußmittel (17, 18, 27, 32) an der Nabe (19) vorgesehen sind, und das Innenteil (16, 31) über den Ringflansch (21, 24) mit dem Außenring (15) in unlösbarer Weise dicht und fest verbunden ist.

2. Filtereinsatz nach Anspruch 1, **dadurch gekennzeichnet, daß** das Innenteil (16, 31) im wesentlichen aus Kunststoff besteht und eine den Außenring (15) radial überlappende Berührungsfläche (24) aufweist, an der es mit dem Außenring (15) fest und dicht verbunden ist.

3. Filtereinsatz nach Anspruch 1 oder 2, **dadurch gekennzeichnet, daß** das Innenteil (16, 31) einen sich radial erstreckenden Ringflansch (21) aufweist, der die parallel zum Außenring (15) verlaufende, überlappende Berührungsfläche (24) bildet, die insbesondere eben ausgebildet ist.

4. Filtereinsatz nach Anspruch 3, **dadurch gekennzeichnet, daß** das Innenteil (16, 31) als Drehteil ausgeführt ist und am Außenumfang der Nabe (19) der radial verlaufende Ringflansch (21) einstückig angeformt ist.

5. Filtereinsatz nach Anspruch 4, **dadurch gekennzeichnet, daß** der Außenring (15) eine Führungsöffnung (23) aufweist, in welcher das Innenteil (16, 31) mit seinem nach innen überstehenden Nabenteil (22) geführt ist.

6. Filtereinsatz nach einem der Ansprüche 3 bis 5, **dadurch gekennzeichnet, daß** der Außenring (15) und der Ringflansch (21) jeweils im Querschnitt eine im wesentlichen rechteckige Form aufweisen, deren lange Seiten aneinander stoßen und die überlappende Berührungsfläche (24) bilden.

7. Filtereinsatz nach einem der Ansprüche 1 bis 6, **dadurch gekennzeichnet, daß** der Außenring (15) und das Innenteil (16, 31) aus dem gleichen Kunststoff bestehen, insbesondere aus Polyamid.

8. Filtereinsatz nach einem der Ansprüche 3 bis 7, **dadurch gekennzeichnet, daß** der Außendurchmesser des Ringflansches (21) wesentlich größer ist als der Innendurchmesser der Führungsöffnung (23).

9. Filtereinsatz nach einem der Ansprüche 1 bis 8, **dadurch gekennzeichnet, daß** das Innenteil (16, 31), insbesondere an seinem nach außen ragenden Nabenteil (26), eine außenliegende Ringnut (27) zur Aufnahme eines Dichtrings (18) aufweist.

10. Filtereinsatz nach einem der Ansprüche 1 bis 8, **dadurch gekennzeichnet, daß** das Innenteil (31), insbesondere an seinem nach außen ragenden Nabenteil (26), in seinem Durchgang (14) eine zur Befestigung dienende Gewindemutter (32), insbesondere aus Metall, aufweist.

11. Filtereinsatz nach einem der Ansprüche 1 bis 10, **dadurch gekennzeichnet, daß** das Filterelement (11) ein Sterneinsatz ist, dessen stirnseitige Ränder in die aus Kunststoff bestehenden Endscheiben (12, 13) bei deren Gießvorgang mit eingegossen werden.

12. Filtereinsatz nach einem der Ansprüche 1 bis 11, **dadurch gekennzeichnet, daß** der Außenring (15) mit dem Innenteil (16, 31) verschweißt ist, insbesondere durch Ultraschall- oder Reibschweißen.

13. Filtereinsatz nach einem der Ansprüche 1 bis 11, **dadurch gekennzeichnet, daß** an das aus thermoplastischem Material bestehende Innenteil (16, 31) nach dessen Einlegen in eine Form der Außenring (15) aus Kunststoff angegossen wird, wobei das Innenteil zumindest an der Berührungsfläche (24) von der Schmelze angeschmolzen wird und daß vor dem Erstarren des flüssigen Kunststoffs das Filterelement (11) in den Außenring (15) eingedrückt wird.

## Claims

1. Filter insert for a liquid filter, in particular for fuel filters, having a substantially hollow-cylindrical filter element, in particular made from filter material which has been folded into a star shape, which filter element is arranged in a sealing manner between end-side end plates made from plastic and through which filter element the liquid which is to be filtered can flow in the radial direction with respect to the longitudinal axis of the filter insert, one end plate being of closed design, while the other end plate has a central passage and connection means for connection to a pressure-medium connection, the other end plate being of two-part structure and having an outer ring (15), which is connected to the filter element (11), and an inner part (16, 31), which includes the connection means (17, 18, 27, 32) and the passage (14), the inner part (16, 31) having a hub (19), which includes the passage (14), and an annular flange (21, 24), the connection means (17, 18, 27, 32) being provided on the hub (19), and the inner part (16, 31) being tightly and fixedly connected in a nonreleasable manner to the outer ring (15) via the annual flange (21, 24).

2. Filter insert according to Claim 1, **characterized in that** the inner part (16, 31) substantially comprises plastic and has a contact surface (24) which radially overlaps the outer ring (15) and at which it is fixedly and tightly connected to the outer ring (15).

3. Filter insert according to Claim 1 or 2, **characterized in that** the inner part (16, 31) has a radially extending annular flange (21) which forms the overlapping contact surface (24) which runs parallel to the outer ring (15) and is in particular of planar design.

4. Filter insert according to Claim 3, **characterized in that** the inner part (16, 31) is designed as a rotary part and the radially running annular flange (21) is formed integrally on the outer circumference of the hub.

5. Filter insert according to Claim 4, **characterized in that** the outer ring (15) has a guide opening (23), in which the inwardly projecting hub part (22) of the inner part (16, 31) is guided.

6. Filter insert according to one of Claims 3 to 5, **characterized in that** the outer ring (15) and the annular flange (21) are each substantially rectangular in cross section, with their long sides butting against one another and forming the overlapping contact surface (24).

7. Filter insert according to one of Claims 1 to 6, **characterized in that** the outer ring (15) and the inner part (16, 31) consist of the same plastic, in particular of polyamide.

8. Filter insert according to one of Claims 3 to 7, **characterized in that** the external diameter of the annular flange (21) is significantly greater than the internal diameter of the guide opening (23).

9. Filter insert according to one of Claims 1 to 8, **characterized in that** the inner part (16, 31), in particular at its outwardly projecting hub part (26), has an outer annular groove (27) for receiving a sealing ring (18).

10. Filter insert according to one of Claims 1 to 8, **characterized in that** the inner part (31), in particular at its outwardly projecting hub part (26), has, in its passage (14), a threaded nut (32) which is made in particular from metal and is used for securing purposes.

11. Filter insert according to one of Claims 1 to 10, **characterized in that** the filter element (11) is a star insert, the end-side edges of which are cast into the end plates (12, 13), which consist of plastic, during the casting of these plates.

12. Filter insert according to one of Claims 1 to 11, **characterized in that** the outer ring (15) is moulded to the inner part (16, 31), in particular by ultrasonic or friction welding.

13. Filter insert according to one of Clams 1 to 11, **characterized in that** the outer ring (15) made from plastic is cast onto the inner part (16, 31), which consists of thermoplastic material, after the inner part has been placed into a mould, the inner part being at least partially melted by the molten material at the contact surface (24), and **in that** the filter element (11) is pressed into the outer ring (15) before the liquid plastic solidifies.

## Revendications

1. Garniture de filtre pour un filtre à liquide, notamment un filtre à carburant, comportant un élément filtrant réalisé essentiellement sous une forme cylindrique creuse en particulier en une matière de filtre pliée en étoile, cet élément de filtre étant installé de manière étanche entre deux disques d'extrémité, en matière plastique, le liquide à filtrer circulant radialement par rapport à l'axe longitudinal de la garniture de filtre pour la traverser, et l'un des disques d'extrémité étant fermé alors que l'autre disque d'extrémité comporte un passage central avec un moyen de branchement pour être relié à un branchement de fluide sous pression, dans laquelle l'autre disque d'extrémité (13) est en deux parties, un anneau extérieur (15) relié à l'élément filtrant (11) et une partie intérieure (16, 31) comportant les moyens de branchement (17, 18, 27, 32) et le passage (14), la partie intérieure (16, 31) comportant un moyeu (19) avec le passage (14) et une bride annulaire (21, 24), les moyens de branchement (17, 18, 27, 32) étant prévus sur le moyeu (19), et la partie intérieure (16, 31) est reliée de manière étanche et solidaire par la bride annulaire (21, 24) à l'anneau extérieur (15) d'une manière solidaire.

2. Garniture de filtre selon la revendication 1,
**caractérisée en ce que**
la partie intérieure (16, 31) est principalement en matière plastique et comporte une surface de contact (24) qui chevauche radialement l'anneau extérieur (15), surface par laquelle elle est reliée solidairement et de manière étanche à l'anneau extérieur (15).

3. Garniture de filtre selon la revendication 1 ou 2,
**caractérisée en ce que**
la partie intérieure (16, 31) comporte une bride annulaire (21) s'étendant radialement et qui forme une surface de contact (24) parallèle à l'anneau extérieur (15), et en chevauchement, cette surface étant notamment plane.

4. Garniture de filtre selon la revendication 3,
**caractérisée en ce que**
la partie intérieure (16, 31) est une pièce tournée et au début du moyeu (19), on a la bride annulaire radiale (21) réalisée en une seule pièce.

5. Garniture de filtre selon la revendication 4,
**caractérisée en ce que**
l'anneau extérieur (15) comporte un orifice de guidage (23) qui guide la partie intérieure (16, 31) avec sa partie de moyeu (22) en saillie vers l'intérieur.

6. Garniture de filtre selon l'une des revendications 3 à 5,
**caractérisée en ce que**
l'anneau extérieur (15) et la bride annulaire (21) ont chaque fois en section une forme essentiellement rectangulaire dont les grands côtés sont appui l'un contre l'autre et constituent la surface de contact de chevauchement (24).

7. Garniture de filtre selon l'une des revendications 1 à 6,
**caractérisée en ce que**
l'anneau extérieur (15) et la partie intérieure (16, 31) sont réalisés dans la même matière plastique notamment en polyamide.

8. Garniture de filtre selon l'une des revendications 3 à 7,
**caractérisée en ce que**
le diamètre extérieur de la bride annulaire (21) est beaucoup plus grand que le diamètre intérieur de l'orifice de guidage (23).

9. Garniture de filtre selon l'une des revendications 1 à 8,
**caractérisée en ce que**
la partie intérieurs (16, 31) comporte notamment sur sa partie de moyeu (26) en saillie vers l'extérieur, une rainure annulaire (27) extérieure pour recevoir un joint d'étanchéité (18).

10. Garniture de filtre selon l'une des revendications 1 à 8,
**caractérisée en ce que**
la partie intérieure (31) comporte notamment sur sa partie de moyeu (26) en saillie vers l'extérieur, dans son passage (14), un écrou fileté (32) notamment en métal servant à la fixation.

11. Garniture de filtre selon l'une des revendications 1 à 10,
**caractérisée en ce que**
l'élément filtrant (11) est un élément en étoile dont les bords frontaux sont noyés dans les disques d'extrémité (12, 13) en matière plastique au moment de la coulée de ces disques.

12. Garniture de filtre selon l'une des revendications 1 à 11,
**caractérisée en ce que**
l'anneau extérieur (15) est soudé à la partie intérieure (16, 31) notamment par ultrasons ou soudure par friction.

13. Garniture de filtre selon l'une des revendications 1 à 11,
**caractérisée en ce que**
sur la partie intérieure (16, 31) réalisée en matière thermoplastique, après son installation dans un moule, on coule de manière jointive l'anneau extérieur (15) en matière plastique, la partie intérieure étant fondue par la matière en fusion au moins au niveau de la surface de contact (24), et avant le figeage de la matière plastique rigide, on enfonce l'élément filtrant (11) dans l'anneau extérieur (15).
